Europäisches Patentamt

European Patent Office

Office européen des brevets

(11) Numéro de publication: **0 493 202 B1**

(12) **FASCICULE DE BREVET EUROPEEN**

(45) Date de publication de fascicule du brevet: **09.08.95**   (51) Int. Cl.⁶: **C03B 13/08**, C03B 13/14

(21) Numéro de dépôt: **91403447.5**

(22) Date de dépôt: **19.12.91**

(54) **Vitrage diffusant, procédé et dispositif permettant de le réaliser.**

(30) Priorité: **21.12.90 FR 9016093**

(43) Date de publication de la demande:
**01.07.92 Bulletin 92/27**

(45) Mention de la délivrance du brevet:
**09.08.95 Bulletin 95/32**

(84) Etats contractants désignés:
**AT BE CH DE DK ES FR GB GR IT LI LU NL SE**

(56) Documents cités:
**DE-C- 658 614       FR-A- 1 063 871**
**FR-A- 1 281 723       FR-A- 1 531 390**
**FR-A- 2 184 579       GB-A- 8 016**
**US-A- 1 718 824**

(73) Titulaire: **SAINT GOBAIN VITRAGE INTERNA-TIONAL**
**"Les Miroirs"**
**18, avenue d'Alsace**
**F-92400 Courbevoie (FR)**

(72) Inventeur: **Hermant, Philippe**
**14, rue des Pavillons**
**F-92800 Puteaux (FR)**
Inventeur: **Chambard, Gérard**
**22 bis rue d'Amiens**
**F-60200 Compiègne (FR)**
Inventeur: **Saalburg, Guillaume**
**9, rue François Bonvin**
**F-75015 Paris (FR)**

(74) Mandataire: **Muller, René**
**SAINT-GOBAIN RECHERCHE**
**39, quai Lucien Lefranc**
**F-93304 Aubervilliers (FR)**

Rank Xerox (UK) Business Services
(3.10/3.09/3.3.3)

## Description

L'invention concerne le domaine des vitrages diffusant la lumière et destinés à l'éclairage des locaux.

Il est connu depuis longtemps, de transformer un verre transparent et à faces parallèles comme un verre flotté, en verre diffusant la lumière. Les deux techniques les plus courantes sont le dépolissage au jet de sable et l'attaque chimique par une pâte à base d'acide fluorhydrique. D'autre part, les techniques de laminage du verre plat à l'aide de rouleaux pour reproduire à la surface du verre, la structure superficielle des rouleaux, en produisant ainsi un verre imprimé sont également bien connues. Les deux familles de méthodes de production précédentes permettent l'une comme l'autre d'obtenir des vitrages diffusant la lumière, mais l'une et l'autre présentent certains inconvénients. C'est ainsi que les méthodes de traitement du verre flotté sont très agressives et "blessent" la surface du verre dont la résistance mécanique se trouve diminuée. De plus la surface a perdu les caractéristiques qui sont celles d'un "poli au feu" et elle devient salissante et d'un entretien difficile. Quant aux verres imprimés, les performances qu'ils fournissent sont souvent médiocres et toujours très différentes de celles des verres diffusants obtenus par traitement du verre flotté.

La mission qui se donne pour tâche l'invention est de fournir un vitrage diffusant qui présente la qualité optique du verre flotté traité sans en avoir les inconvénients, c'est-à-dire, en particulier, qui ne soit pas salissant, qui ait une bonne résistance à la flexion, et dont les détails de la structure ne soient pas visibles à courte distance.

Des deux techniques de l'art antérieur qui permettent d'obtenir un vitrage plan avec une surface diffusante la plus usitée est le sablage d'un verre plan poli sur ses deux faces tel qu'un verre flotté. Les techniques de sablage sont très employées dans de multiples industries, elles se pratiquent dans des enceintes fermées dans lesquelles une pompe produit la circulation d'une poudre abrasive (sable de granulométrie définie, corindon...) en suspension dans l'air sous pression. Ce sablage permet de traiter les surfaces en les attaquant sur une profondeur plus ou moins grande, le résultat obtenu est variable, depuis un simple nettoyage de la surface jusqu'à une restructuration en profondeur. Appliquée à une plaque de verre poli la méthode permet d'obtenir une surface régulièrement mate qui, selon la profondeur de ses reliefs, diffuse plus ou moins la lumière aussi bien en transmission qu'en réflexion. Parfois pour des raisons diverses, techniques et/ou esthétiques, l'on désire maintenir une bonne transparence sur certaines zones de la plaque de verre. Il suffit pour atteindre le résultat de protéger la partie intéressante avec un film en élastomère avant d'introduire la plaque dans l'enceinte. Les produits utilisés sont par exemple le polychloroprène en feuille ou le latex déposé au pinceau. La zone concernée apparaîtra intacte après le décollement de l'élastomère. Le but de telles zones transparentes au milieu de surfaces totalement diffusantes peut être de permettre à un observateur qui approche son oeil du vitrage de parfaitement voir de l'autre côté et cela sans être lui même observé. Il est également possible par la même méthode, d'obtenir des effets esthétiques variés.

La technique de sablage est très simple à mettre en oeuvre et elle permet d'obtenir avec une grande souplesse les réserves qu'on souhaite. Les produits obtenus présentent cependant deux graves inconvénients qui limitent grandement l'utilisation de la technique de sablage : les vitrages sablés sont fragilisés et très salissants. On constate la plus grande fragilité du verre sablé si on compare sa résistance à la flexion (méthode des quatre points) du verre flotté de base à celle d'un échantillon sablé identique, on constate que la valeur de la contrainte au point de rupture passe de 200 à 50 MPa. Un inconvénient pratique réside lui, dans la grande facilité avec laquelle les verres sablés se salissent. Les empreintes digitales, en particulier laissent des traces sur leur surface qu'il est très difficile de nettoyer. Le seul moyen est d'utiliser des solvants puissants et d'agir mécaniquement en brossant énergiquement.

L'autre moyen pratiqué pour rendre diffusant un verre flotté, l'attaque chimique, permet de palier les deux inconvénients précédents. Les techniques de matage à l'acide sont bien connues des spécialistes. Des solutions plus ou moins visqueuses, des pâtes, sont commercialisées. Elles sont toutes à base d'acide fluorhydrique auquel sont ajoutés des produits chimiques divers tels que par exemple du fluorure d'ammonium et des charges. La difficulté de cette technique réside dans sa mise en oeuvre : les produits en cause sont très actifs et il est très difficile de les faire agir régulièrement. On peut utiliser pour cela des techniques de sérigraphie au travers d'un tamis en textile polyamide posé sur la surface du verre tandis que la pâte est déplacée sur la face supérieure du tamis à l'aide d'une raclette. Une autre technique, celle du brevet français FR-A-1 503 587, propose d'utiliser la solution agressive sous forme d'un aérosol de manière à obtenir la condensation de gouttelettes calibrées sur le verre. Le produit obtenu est régulier et ne présente pas les inconvénients du produit sablé en particulier, si la mise en oeuvre de la méthode est soignée, la résistance mécanique du produit est du même ordre - et même parfois meilleureque celle du verre de base. D'un autre coté l'état de surface obtenu est tel que les doigts n'y laissent en général aucune trace.

Cependant, la technique de matage à l'acide montre deux types d'inconvénients, d'une part elle pose des problèmes relatifs à l'environnement et d'autre part elle ne permet pas d'obtenir facilement un vitrage mixte, diffusant pour certaines parties de sa surface, transparent pour le reste. En ce qui concerne ce dernier point, les protections qu'on pourrait placer à la surface d'un verre flotté pour empêcher le matage de la zone concernée présentent des surépaisseurs gênantes pour la sérigraphie et d'autre part, les solutions chimiques sont tellement agressives qu'elles pénètrent sous les protections et empêchent d'obtenir des délimitations nettes à la frontière des deux zones. Les dangers de l'utilisation industrielle de l'acide fluorhydrique sont bien connus, autant pour les hommes que pour l'environnement sans qu'il soit nécessaire de s'y attarder.

Des méthodes permettant de laisser une empreinte donnée sur le verre chaud ont également été utilisées de manière à obtenir des effets optiques spéciaux sur le produit terminé.

Le brevet US-A-1 718 824 propose ainsi grâce à une technique de coulée sur table, d'imprimer dans la surface du verre un fond diffusant grâce à une structure comportant des trous qui rendent le vitrage translucide avec une surface "givrée". Ce fond diffusant est interrompu par des saignées avec une section en V qui réfractent la lumière. Cette structure de la surface du verre est l'empreinte laissée par celle de la table sur laquelle le verre est répandu avant d'être roulé par un rouleau qui laisse lui, une surface non structurée de l'autre côté.

Une technique plus récente qui concerne des plaques de verre ou de plastique et qui évoque le laminage du verre entre deux rouleaux est décrite dans le brevet FR-A-1 281 723. Son principe est d'obtenir un effet de moiré en imprimant sur chacune des faces du verre un motif régulier constitué par des rangées régulières de petits prismes coniques ou de cônes circulaires en relief et/ou en creux, l'originalité de la technique consistant à déposer les rangées d'une face de manière qu'elles fassent un angle faible avec les rangées de l'autre.

Les techniques décrites dans les deux brevets précédents, ou bien ne donnent aucun détail sur la structure diffusante comme le premier qui parle de "la manière habituelle" de réaliser la surface "givrée" ou bien montrent comme le deuxième, une structure très grossière où le pas des cônes de révolution est de l'ordre de l'épaisseur de la plaque de verre. Ce qui est d'ailleurs indispensable pour produire les figures géométriques annoncées.

La solution proposée par l'invention pour l'obtention de verres plats diffusants permet d'éviter les inconvénients des techniques de sablage ou de matage à l'acide précédentes sans utiliser les mêmes moyens que ceux de l'art antérieur.

L'invention propose un vitrage diffusant obtenu par laminage du verre à chaud et où l'empreinte imprimée dans le verre dans les plages diffusantes est constituée de cratères pyramidaux tous identiques séparés les uns des autres par des distances inférieures à leur plus grande dimension, ces cratères sont de préférence à base hexagonale, ce sont souvent des pyramides tronquées. Les bases des cratères s'inscrivent dans des cercles de diamètre compris entre 0,5 et 1,7 mm et la distance entre deux cratères voisins est inférieure au tiers du diamètre. Le vitrage de l'invention possède des cratères pyramidaux dont les caractéristiques sont telles qu'elles lui procurent une structure diffusante qui n'est pas visible à l'oeil nu à une distance d'au moins 6 mètres. Dans une variante, la distance des centres de deux cratères voisins est inférieure à 1 mm et les caractéristiques des cratères pyramidaux autres que la distance de leurs centres sont telles que la fraction de la lumière transmise diffusée est supérieure à 20 %. Eventuellement, les zones diffusantes précédentes enclavent des zones diffusantes à motifs de pas plus grand. Dans une autre variante, le vitrage comporte, en plus des parties diffusantes, des plages transparentes qui sont en creux à la surface du verre avec un fond sensiblement plan, leur profondeur est comprise entre 0,5 et 1 mm et est de préférence de 0,8 mm.

L'invention concerne de plus le procédé pour obtenir un vitrage diffusant par une technique de laminage à chaud dans lequel le verre est laminé entre un rouleau inférieur lisse et un rouleau supérieur comportant des pintes pyramidales identiques régulièrement espacées dont la distance qui les sépare est inférieure à la plus grande dimension. Ce sont de préférence des troncs de pyramides hexagonales.

L'invention concerne également le rouleau pour produire par laminage un verre diffusant, il comporte des pointes pyramidales identiques régulièrement espacées et la distance séparant les bases des pyramides est inférieure à leur plus grande dimension, par ailleurs, les pointes pyramidales sont des troncs de pyramides hexagonales et les bases des pyramides s'inscrivent dans des cercles de diamètre compris entre 0,5 et 1,7 mm. Dans une variante, la distance des centres de deux pointes pyramidales voisines est inférieure à 1 mm. Par ailleurs, le rouleau comporte des plages lisses en relief à la partie supérieure sensiblement parallèle à sa surface et dont l'épaisseur est comprise entre 0,5 et 1 mm et est de préférence de 0,85 mm.

Les techniques de l'invention permettent ainsi d'obtenir avec des moyens simples, d'une mise en oeuvre traditionnelle dans l'industrie, sans danger pour l'environnement, des produits performants et qui ne présentent pas les inconvénients des techniques antérieures : le choix du motif géométrique permet de maîtriser la diffusion, la surface ne se salit pas et est facile à entretenir. Quant aux zones transparentes qui peuvent permettre la vision, elles s'obtiennent très facilement et ne nécessitent aucune main d'oeuvre supplémentaire.

Les figures et la description qui suivent permettront de comprendre le fonctionnement de l'invention.

Les figures 1,2,3 et 4 montrent l'aspect de la surface du verre laminé selon l'invention juste après le laminage.

La figure 5 représente l'aspect du verre laminé avec ses zones de vision.

La figure 6 présente les résultats statistiques des tests de flexion.

La technique de l'invention est une technique de laminage. Le laminage du verre chaud entre deux rouleaux est une technique connue depuis que la fabrication du verre plat est devenue industrielle. Le verre pâteux qui s'écoule par débordement de la cuve d'un four chauffé soit par flammes au dessus du bain, soit par effet Joule dans le bain lui-même se dirige vers deux rouleaux horizontaux, en acier qui l'entraînent en lui donnant la forme d'une plaque de largeur et d'épaisseur déterminées mais de longueur indéfinie. L'un des rouleaux au moins, en général le rouleau supérieur, possède une surface périphérique avec un relief.

Cette surface structurée est pressée sur la surface malléable du verre lors du laminage et celui-ci qui est très mou à cette température prend à cet instant l'empreinte de cette structure. Cependant, comme le verre possède une inertie thermique non négligeable, sa surface ne se fige pas instantanément. Les contraintes introduites dans la masse de verre lors de l'impression ont tendance à se relaxer en provoquant un fluage superficiel. Tous ces phénomènes expliquent pourquoi le relief de la surface du rouleau ne se retrouve pas -en négatif- à la surface du verre après son refroidissement : si l'on peut définir avec précision la structure du rouleau-imprimeur, la structure qui en résulte sur le verre froid, l'empreinte résultante, ne peut-être définie, elle, avec précision. Lorsque qu'on veut obtenir un effet optique donné avec un verre imprimé, la meilleure manière de caractériser ce verre est de définir avec précision le relief qu'il avait au moment du laminage, lorsque la structure superficielle du rouleau a labouré sa surface. Cette structure est la réplique, la forme exactement complémentaire de celle du rouleau.

Pour atteindre le but de l'invention, c'est à dire obtenir un effet optique, une diffusion de la lumière, qui possède les mêmes qualités que ce que produit un verre maté au sable ou à l'acide, c'est à dire, une répartition régulière de la lumière transmise, sans orientations préférentielles et l'absence de structure visible à l'oeil nu à une distance supérieure à six mètres lorsqu'on éclaire l'échantillon en lumière diffuse, on a découvert qu'il suffisait d'utiliser un rouleau supérieur comportant des pointes pyramidales séparées par des zones "planes" (qui suivent en réalité la surface d'un cylindre de révolution à la périphérie du rouleau), le rouleau inférieur, quant à lui, est lisse.

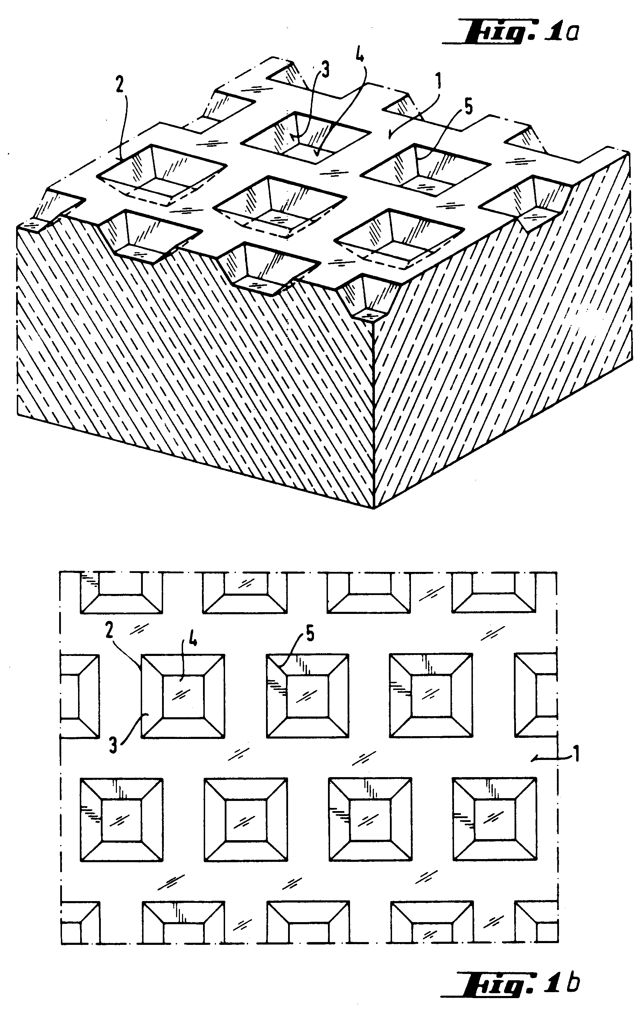

Sur la figure 1, on a représenté un premier exemple du relief imprimé dans la masse du verre lors du laminage. Conformément à l'invention, le rouleau comportait des pointes pyramidales séparées par des zones "planes". Les pointes étaient des troncs de pyramide à base carré. Le relief obtenu sur le verre chaud comporte, en négatif, le même relief. On voit en 1, la surface restée plane. La base carrée de la pyramide laisse sa trace en 2 et ses surfaces latérales en 3 et le sommet tronqué produit l'empreinte carrée au fond du cratère 4. Dès que l'impression à été faite dans le verre pâteux au moment du laminage tous les angles vifs s'estompent. C'est en particulier le cas pour les arêtes 5 de l'empreinte. Les pointes pyramidales du rouleau sont disposées en quinconce et il en est évidemment de même pour les cratères qui marquent la surface du verre. Les dimensions des pointes pyramidales à leur base étaient 0,5 x 0,5 mm et à leur sommet tronqué 0,25 x 0,25 mm. La distance séparant deux côtés parallèles qui est la même dans les deux directions pour obtenir un effet optique isotrope était de 0,5 mm. La face latérale de la pyramide faisait un angle de sensiblement 45° avec le plan de sa base.

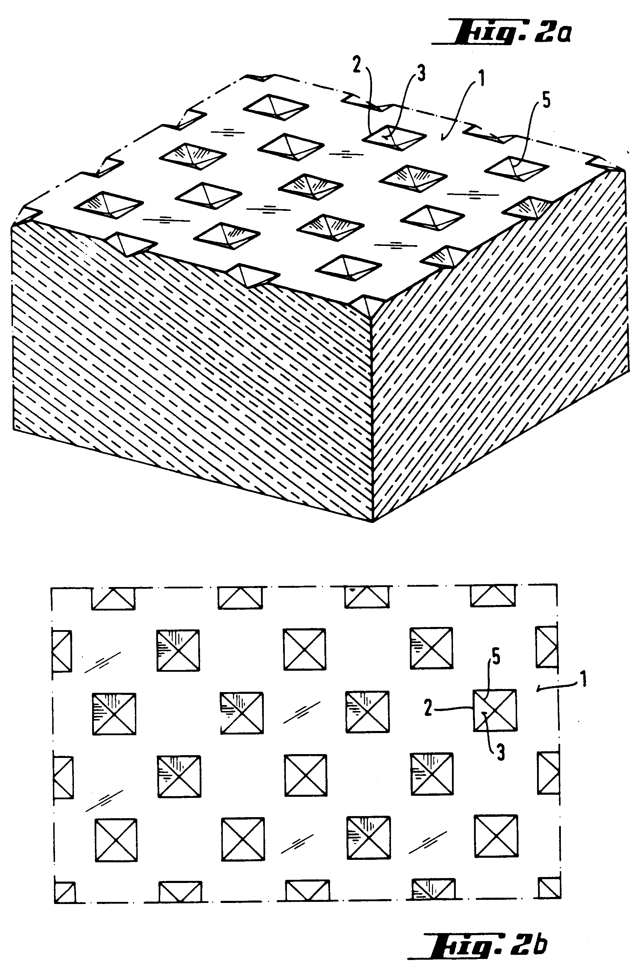

Sur la figure 2 le motif représenté consiste en des "pointes de diamant". Les pyramides, toujours à base carrée ne sont pas tronquées. Elles sont également disposées en quinconce, les alignements constituent des rangées parallèles aux côtés des bases des pyramides et la distance de deux axes successifs est égale à 1,5 fois le côté. Le côté des carrés est de 0,5 mm.

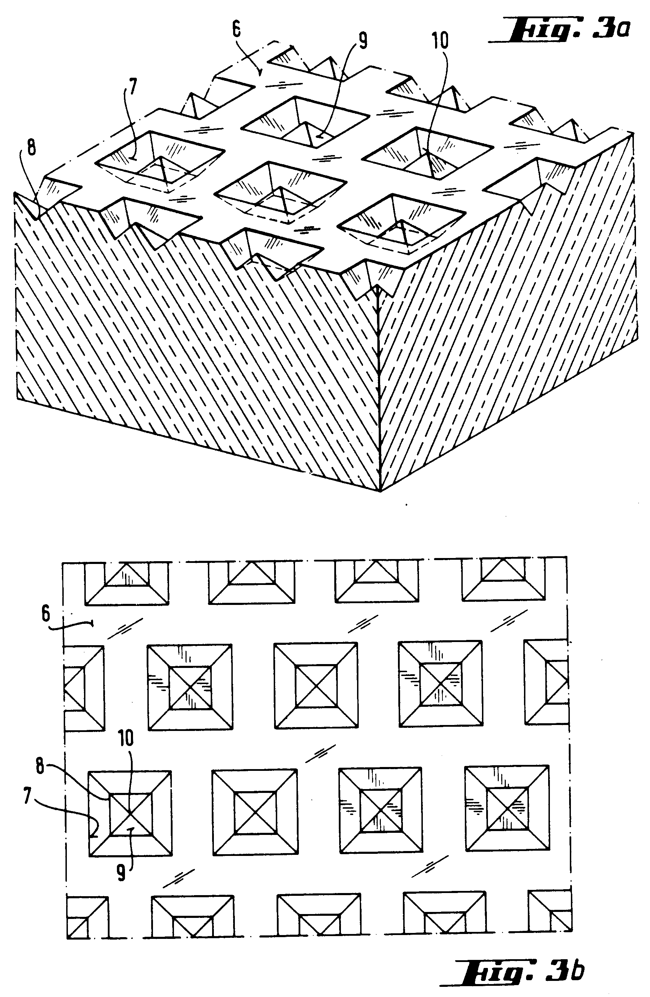

Sur la figure 3, la disposition est la même que sur la figure 2 mais, ici la forme de chaque pointe pyramidale est particulière. La partie basse de la pointe est celle d'une pyramide carrée, mais, à mi-hauteur du sommet, la figure s'inverse et la surface redescend, en creux à l'intérieur de la base. L'empreinte obtenue sur le verre chaud est représentée sur la figure. On voit en 6 la surface restée plane, en 7 les flancs de la grande pyramide, en creux dans le verre. En 8 on trouve le carré qui constitue la ligne de rebroussement et enfin, en 9 la pointe de la pyramide inversée. Comme, dans l'exemple, le rebroussement était effectué à mi-hauteur, la pointe 10 de la petite pyramide se trouvait sensiblement au niveau de la

4

surface restée plane du verre 6.

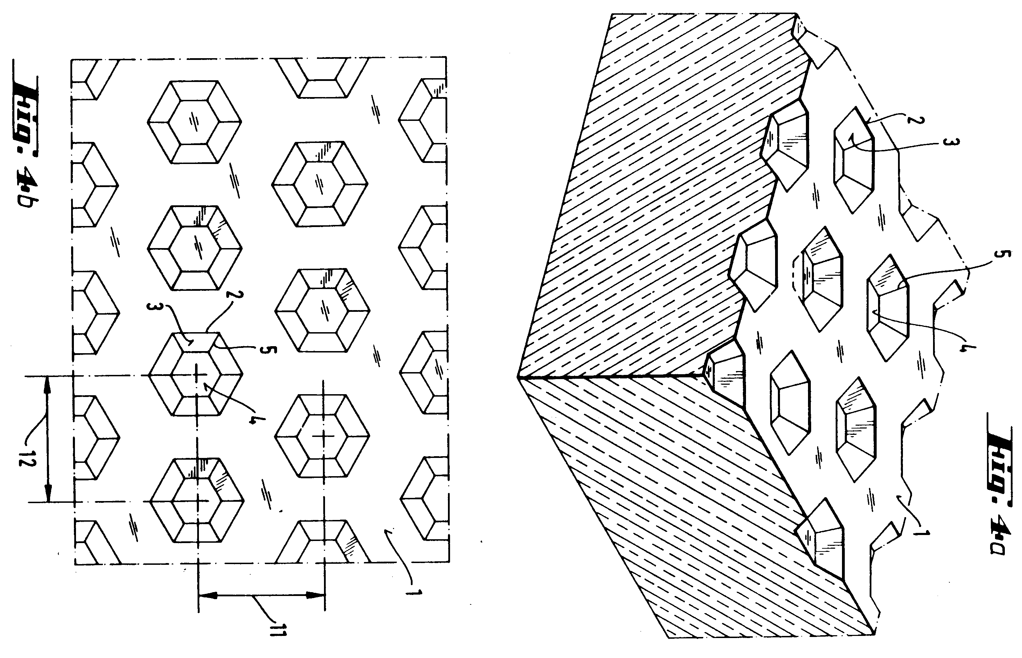

Le principe du motif de la figure 4 est le même que celui de la figure 1, la différence résidant dans la forme des pointes pyramidales qui sont hexagonales ici. La forme obtenue dans le verre chaud est en conséquence constituée de cavités hexagonales à fond plat. La forme préférée pour la pyramide est celle qui a un angle de 60° entre la base et les faces. La hauteur du tronc de pyramide est la moitié du diamètre du cercle circonscrit au polygone de base.

On a réalisé deux variantes du motif précédent l'une, le type A, avec une distance 11 entre rangées de pyramides de 0,7 mm et une autre, le type B, avec une distance de 1,7 mm. La distance 12 entre deux pyramides voisines d'une même rangée étant, elle, de respectivement également 0,7 et 1,7 mm. La base de la pyramide s'inscrit dans un cercle de diamètre 0,7 mm pour le type A et de 1,67 mm pour le type B. Il s'ensuit que les pyramides du type A ont leurs bases en contact les unes avec les autres tandis que celles du type B ont les côtés de leurs bases distants de 0,20 mm dans une même rangée et de 0,55 mm de rangée à rangée.

L'effet diffusant du vitrage selon l'invention est obtenu par la juxtaposition des cratères pyramidaux précédents. On a effectué des mesures de diffusion lumineuse aussi bien sur des échantillons du type A que sur ceux du type B, à titre de comparaison, les mesures ont été également faites avec un verre flotté sablé. La mesure consiste à éclairer l'échantillon sous incidence normale avec un faisceau de lumière blanche parallèle et à recueillir et mesurer de l'autre côté toute la lumière transmise, à l'aide d'une sphère intégrante. Celle-ci a deux positions l'une qui recueille le faisceau parallèle et l'autre qui le laisse sortir par un orifice ad hoc. La mesure se fait sans ou avec échantillon et dans ce dernier car, avec ou sans le faisceau direct.

La mesure la plus intéressante est celle de la fraction de la lumière transmise qui est diffusée. Dans les trois cas, avec incidence du côté lisse, on a trouvé :

|  | Fraction diffuse % |
|---|---|
| Sablage | 65,4 |
| Type A | 23,0 |
| Type B | 51,6 |

On a par ailleurs réalisé des échantillons diffusants mixtes qui comportaient des motifs réguliers de "grande" taille comme ceux du type B précédent et, à la place des plages sensiblement lisses intermédiaires, une structure diffusante fine, comme celle du type A. Les résultats optiques sont intermédiaires entre ceux du type A et du type B précédents.

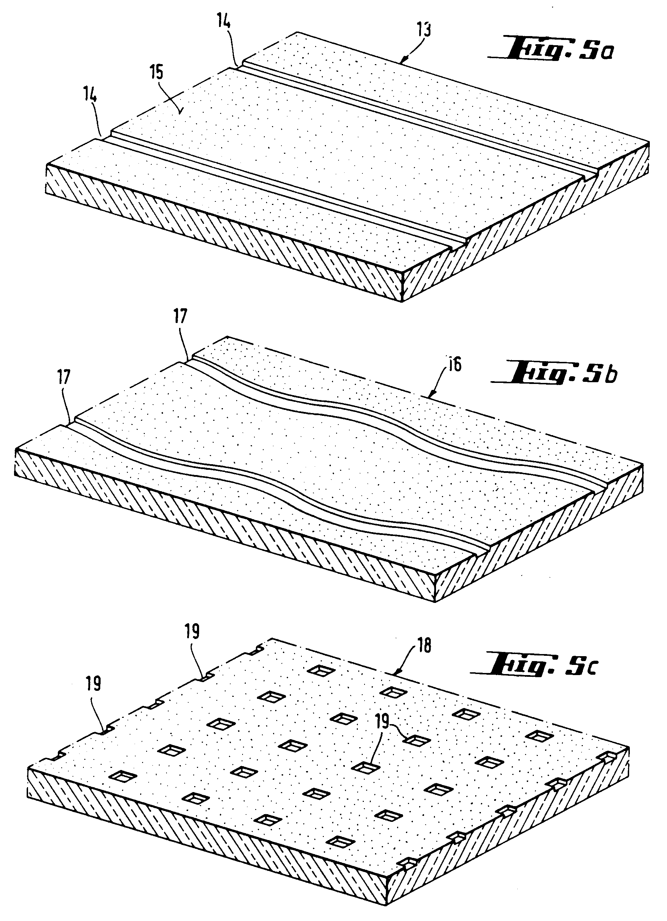

La forme de réalisation qu'on vient de décrire où l'ensemble de la surface est diffusante est évidemment la plus efficace, cependant, pour permettre la vision au travers de certaines zones du vitrage ou pour des raisons esthétiques, l'invention prévoit d'insérer des plages transparentes avec un fond sensiblement plat et parallèle à la plaque de verre réparties dans les parties diffusantes de surface globale beaucoup plus importantes que la somme des surfaces des plages transparentes. On a représenté figure 5, trois exemples de réalisation. Le motif 13 comporte des bandes transparentes parallèles séparées par des zones diffusantes. Les lignes transparentes 14 ont une largeur de 2 mm et une profondeur au moment du laminage de 0,8 mm, leur écartement entre axes est de 22 mm. La zone intermédiaire diffusante 15 est constituée de la juxtaposition de cratères hexagonaux distants de 0,7 mm. Le motif 16 est en tous points identique à l'exception de la forme des lignes qui, au lieu d'être droite est sinusoïdale avec une période de 30 mm. Quant au motif 18, il comporte isolées dans la partie diffusante analogue aux précédentes des zones claires 19 qui sont des carrés de 2 mm de côté placés eux-mêmes de manière à réaliser un maillage carré d'un pas de 9 mm. A la surface du verre, les indentations des carrés 19 ont une profondeur de 0,8 mm.

Le but de l'invention est de fournir des vitrages diffusants ayant des propriétés équivalentes ou meilleures que celles des vitrages obtenus par les techniques de sablage ou de matage à l'acide tout en étant meilleur marché et non polluantes. Parmi les performances, le fait que les verres laminés soient insensibles aux traces de doigts est bien connu et de ce point de vue, les vitrages de l'invention ont des propriétés bien supérieures à celles des verres sablés. On souhaitait également obtenir de meilleures performances mécaniques. On a donc procédé à des essais de flexion. Ceux-ci sont réalisés sur un dynamomètre commercialisé par INSTRON sur des échantillons d'épaisseur 4 mm d'une longueur de 80 mm et d'une largeur de 40 mm. Le dispositif de flexion est dit "à quatre appuis" et il permet d'obtenir une contrainte uniforme sur une zone de 40 X 40 mm. Pour chaque type de verre, on a mesuré une trentaine d'échantillons et on a procédé à un dépouillement statistique, on a tracé en particulier les droites de WEIBULL qui montrent que dans les cinq cas, la répartition était sensiblement gaussienne.

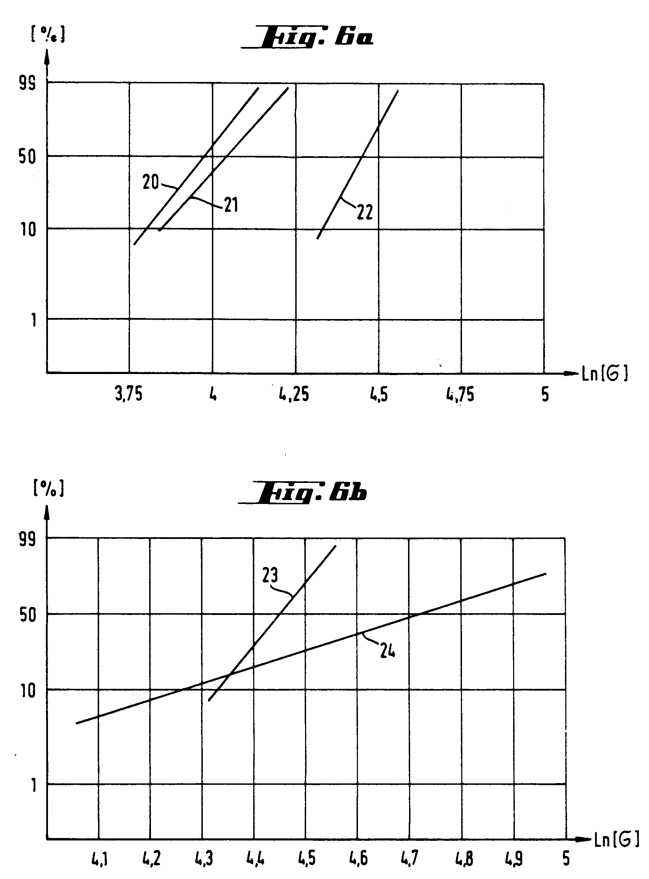

Ces droites sont représentées figure 6. On a porté en abscisse le logarithme naturel de la contrainte de rupture $\sigma$ en mégapascals et en ordonnées, le pourcentage cumulé des échantillons dont la casse s'est produite pour une contrainte correspondant à l'abscisse concernée. L'échelle des pourcentages correspond à la répartition gaussienne. Sur la figure 6, on voit en 20, le comportement d'un échantillon sablé. En 21, se trouve la droite de WEIBULL des échantillons du type B c'est à dire obtenus avec des pointes pyramidales hexagonales au pas de 1,7 mm. 22 est la courbe de WEIBULL du type A, c'est à dire avec un pas de 0,7 mm. Sur l'autre partie de la figure 6, on voit avec une échelle d'abscisses différente, en 23 la même droite (correspondant au type B). En 24 on voit la synthèse des résultats de flexion obtenus avec un verre laminé aux deux faces lisses.

Les valeurs médianes des quatre types de verre sont reprises dans le tableau.

## CONTRAINTE DE RUPTURE SOUS FLEXION
### (médiane)

| Verre | Sablé | Type B | Type A | Laminé lisse |
|-------|-------|--------|--------|--------------|
| Ln ($\sigma$) | 3,95 | 4,04 | 4,40 | 4,68 |

Ce tableau montre que les résultats obtenus avec les verres laminés de l'invention sont intermédiaires entre ceux d'un verre laminé lisse et ceux d'un verre sablé.

**Revendications**

1. Vitrage diffusant obtenu par laminage du verre à chaud, **caractérisé en ce que** l'empreinte imprimée dans le verre dans les plages diffusantes est constituée de cratères pyramidaux tous identiques séparés les uns des autres par des distances inférieures à leur plus grande dimension.

2. Vitrage selon la revendication 1, **caractérisé en ce que** les cratères pyramidaux sont choisis parmi ceux à base hexagonale ou carrée.

3. Vitrage selon la revendication 2, **caractérisé en ce que** les cratères pyramidaux sont des pyramides tronquées.

4. Vitrage selon la revendication 3, **caractérisé en ce que** les bases des cratères s'inscrivent dans des cercles de diamètre compris entre 0,5 et 1,7 mm.

5. Vitrage selon la revendication 4, **caractérisé en ce que** la distance entre deux cratères voisins est inférieure au tiers du diamètre.

6. Vitrage selon l'une des revendications précédentes, **caractérisé en ce que** les caractéristiques des cratères pyramidaux sont telles que la structure diffusante n'est pas visible à l'oeil nu à une distance d'au moins 6 mètres.

7. Vitrage selon l'une des revendications précédentes, **caractérisé en ce que** la distance des centres de deux cratères voisins est inférieure à 1 mm.

8. Vitrage selon la revendication 7, **caractérisé en ce que** les caractéristiques des cratères pyramidaux autres que la distance de leurs centres sont telles que la fraction de la lumière transmise diffusée est supérieure à 20 %.

9. Vitrage comportant des plages diffusantes selon l'une des revendications précédentes au milieu desquelles sont intercalées des zones diffusantes à motifs de pas plus grand.

10. Vitrage diffusant selon l'une des revendications précédentes, **caractérisé en ce qu'**il comporte en plus des parties diffusantes, des plages transparentes.

11. Vitrage selon la revendication 10, **caractérisé en ce que** les plages transparentes sont en creux à la surface du verre avec un fond sensiblement plan.

12. Vitrage selon la revendication 11, **caractérisé en ce que** la profondeur des plages transparentes est comprise entre 0,5 et 1 mm et est de préférence de 0,8 mm.

13. Procédé pour obtenir un vitrage diffusant par une technique de laminage à chaud, **caractérisé en ce que** le verre est laminé entre un rouleau inférieur lisse et un rouleau supérieur comportant des pointes pyramidales identiques régulièrement espacées dont la distance qui les sépare est inférieure à la plus grande dimension.

14. Procédé selon la revendication 13, **caractérisé en ce que** les pointes pyramidales sont des troncs de pyramides hexagonales.

15. Rouleau pour produire par laminage un verre diffusant, **caractérisé en ce qu'**il comporte des pointes pyramidales identiques régulièrement espacées, de manière telle que la distance séparant les bases des pyramides soit inférieure à leur plus grande dimension.

16. Rouleau selon la revendication 15, **caractérisé en ce que** les pointes pyramidales sont des troncs de pyramides hexagonales.

17. Rouleau selon la revendication 16, **caractérisé en ce que** les bases des pyramides s'inscrivent dans des cercles de diamètre compris entre 0,5 et 1,7 mm.

18. Rouleau selon l'une des revendications 15 à 17, **caractérisé en ce que** la distance séparant les centres de deux pointes pyramidales voisines est inférieure à 1 mm.

19. Rouleau selon l'une des revendications 15 à 18, **caractérisé en ce qu'**il comporte des plages lisses en relief à la partie supérieure sensiblement parallèle à sa surface.

20. Rouleau selon la revendication 19, caractérisé en ce que l'épaisseur des plages lisses est comprise entre 0,5 et 1 mm et est de préférence de 0,85mm.

**Claims**

1. Diffusing pane, produced by hot rolling of glass, characterized in that the imprint printed into the glass in the diffusing areas is composed of pyramidal craters, all identical and separated from one another by distances smaller than their largest dimension.

2. Pane according to Claim 1, characterized in that the pyramidal craters are chosen from among those having a hexagonal or square base.

**3.** Pane according to Claim 2, characterized in that the pyramidal craters are truncated pyramids.

**4.** Pane according to Claim 3, characterized in that the bases of the craters can be inscribed in circles having a diameter of between 0.5 and 1.7 mm.

**5.** Pane according to Claim 4, characterized in that the distance between two adjacent craters is less than one-third of the diameter.

**6.** Pane according to one of the preceding Claims, characterized in that the characteristics of the pyramidal craters are such that the diffusing structure is not visible to the naked eye at a distance of at least 6 metres.

**7.** Pane according to one of the preceding Claims, characterized in that the distance between the centres of two adjacent craters is less than 1 mm.

**8.** Pane according to Claim 7, characterized in that the characteristics of the pyramidal craters other than the distance between their centres are such that the fraction of the transmitted light diffused is greater than 20%.

**9.** Pane comprising diffusing areas according to one of the preceding Claims, among which are interposed diffusing zones having motifs of a larger pitch.

**10.** Diffusing pane according to one of the preceding Claims, characterized in that it comprises, in addition to the diffusing parts, transparent areas.

**11.** Pane according to Claim 10, characterized in that the transparent areas are recessed from the surface of the glass with a substantially flat base.

**12.** Pane according to Claim 11, characterized in that the depth of the transparent areas is from 0.5 to 1 mm and is preferably 0.8 mm.

**13.** Method of producing a diffusing pane by a hot rolling technique, characterized in that the glass is rolled between a smooth lower roller and an upper roller comprising uniformly spaced, identical pyramidal points, the distance that separates them being less than the largest dimension.

**14.** Method according to Claim 13, characterized in that the pyramidal points are truncated hexagonal pyramids.

**15.** Roller for producing by rolling a diffusing glass, characterized in that it comprises identical pyramidal points, uniformly spaced in such a way that the distance separating the bases of the pyramids is less than their largest dimension.

**16.** Roller according to Claim 15, characterized in that the pyramidal points are truncated hexagonal pyramids.

**17.** Roller according to Claim 16, characterized in that the bases of the pyramids can be inscribed in circles of a diameter between 0.5 and 1.7 mm.

**18.** Roller according to one of Claims 15 to 17, characterized in that the distance between the centres of two adjacent pyramidal points is less than 1 mm.

**19.** Roller according to one of Claims 15 to 18, characterized in that it comprises smooth areas in relief, having the upper part substantially parallel to its surface.

**20.** Roller according to Claim 19, characterized in that the thickness of the smooth areas is from 0.5 to 1 mm and is preferably 0.85 mm.

8

**Patentansprüche**

1. Lichtstreuende Verglasung, hergestellt durch Heißwalzen von Glas, **dadurch gekennzeichnet, daß** die in das Glas gepreßte Einprägung in den lichtstreuenden Bereichen aus sämtlich identischen pyramidenförmigen Vertiefungen gebildet ist, die voneinander durch Abstände kleiner als ihre größte Abmessung getrennt sind.

2. Verglasung nach Anspruch 1, **dadurch gekennzeichnet, daß** die pyramidenförmigen Vertiefungen aus solchen mit sechseckiger oder quadratischer Grundfläche ausgewählt sind.

3. Verglasung nach Anspruch 2, **dadurch gekennzeichnet, daß** die pyramidenförmigen Vertiefungen die Form von Pyramidenstümpfen aufweisen.

4. Verglasung nach Anspruch 3, **dadurch gekennzeichnet, daß** die Grundflächen der Vertiefungen in Kreisen mit einem Durchmesser von 0,5 bis 1,7 mm einbeschrieben sind.

5. Verglasung nach Anspruch 4, **dadurch gekennzeichnet, daß** der Abstand zwischen zwei benachbarten Vertiefungen weniger als ein Drittel des Durchmessers beträgt.

6. Verglasung nach einem der vorhergehenden Ansprüche, **dadurch gekennzeichnet, daß** die Eigenschaften der pyramidenförmigen Vertiefungen derart sind, daß die lichtstreuende Struktur in einem Abstand von mindestens 6 Metern mit bloßem Auge nicht sichtbar ist.

7. Verglasung nach einem der vorhergehenden Ansprüche, **dadurch gekennzeichnet, daß** der Abstand der Mittelpunkte zweier benachbarter Vertiefungen kleiner als 1 mm ist.

8. Verglasung nach Anspruch 7, **dadurch gekennzeichnet, daß** die anderen Eigenschaften der pyramidenförmigen Vertiefungen als der Abstand ihrer Mittelpunkte derart sind, daß der Anteil des gestreuten durchgelassenen Lichts über 20 % beträgt.

9. Verglasung, enthaltend lichtstreuende Bereiche nach einem der vorhergehenden Ansprüche, inmitten derer lichtstreuende Zonen mit Mustern, die größere Abstände aufweisen, eingeordnet sind.

10. Lichtstreuende Verglasung nach einem der vorhergehenden Ansprüche, **dadurch gekennzeichnet, daß** sie außer lichtstreuenden Bereichen durchsichtige Bereiche enthält.

11. Verglasung nach Anspruch 10, **dadurch gekennzeichnet, daß** die durchsichtigen Bereiche zur Glasoberfläche tiefliegend sind und einen im wesentlichen ebenen Boden besitzen.

12. Verglasung nach Anspruch 11, **dadurch gekennzeichnet, daß** die Tiefe der durchsichtigen Bereiche 0,5 bis 1 mm und vorzugsweise 0,8 mm beträgt.

13. Verfahren zur Herstellung einer lichtstreuenden Verglasung durch einen Heißwalzvorgang, **dadurch gekennzeichnet, daß** das Glas zwischen einer glatten unteren Walze und einer oberen Walze gewalzt wird, welche regelmäßig beabstandete, identische pyramidenförmige Spitzen aufweist, deren sie trennender Abstand kleiner als ihre größte Abmessung ist.

14. Verfahren nach Anspruch 13, **dadurch gekennzeichnet, daß** die pyramidenförmigen Spitzen sechseckige Pyramidenstümpfe sind.

15. Walze zur Herstellung eines lichtstreuenden Glases durch Walzen, **dadurch gekennzeichnet, daß** sie regelmäßig beabstandete, identische pyramidenförmige Spitzen derart aufweist, daß der die Grundflächen der Pyramiden trennende Abstand kleiner als ihre größte Abmessung ist.

16. Walze nach Anspruch 15, **dadurch gekennzeichnet, daß** die pyramidenförmigen Spitzen sechseckige Pyramidenstümpfe sind.

**17.** Walze nach Anspruch 16, **dadurch gekennzeichnet, daß** die Grundflächen der Pyramiden in Kreisen mit einem Durchmesser von 0,5 bis 1,7 mm einbeschrieben sind.

**18.** Walze nach einem der Ansprüche 15 bis 17, **dadurch gekennzeichnet, daß** der Abstand, welcher die Mittelpunkte zweier benachbarter pyramidenförmiger Spitzen trennt, kleiner als 1 mm ist.

**19.** Walze nach einem der Ansprüche 15 bis 18, **dadurch gekennzeichnet, daß** sie ein Relief mit glatten Bereichen aufweist, deren oberer Teil im wesentlichen parallel zu ihrer Oberfläche verläuft.

**20.** Walze nach Anspruch 19, **dadurch gekennzeichnet, daß** die glatten Bereiche 0,5 bis 1 mm und vorzugsweise 0,85 mm dick sind.

Fig. 1a

Fig. 1b

Fig. 2a

Fig. 2b

Fig. 3a

Fig. 3b

Fig: 4·a

Fig: 4·b

14    15    14    13    *Fig. 5a*

17    17    16    *Fig. 5b*

19    19    19    18    *Fig. 5c*

Fig. 6a

Fig. 6b